(19) Europäisches Patentamt / European Patent Office / Office européen des brevets

(11) **EP 4 257 452 B1**

(12) **FASCICULE DE BREVET EUROPEEN**

(45) Date de publication et mention de la délivrance du brevet:
**03.04.2024 Bulletin 2024/14**

(21) Numéro de dépôt: **23158655.3**

(22) Date de dépôt: **26.02.2023**

(51) Classification Internationale des Brevets (IPC):
***B62B 5/00*** *(2006.01)* ***B60K 7/00*** *(2006.01)*

(52) Classification Coopérative des Brevets (CPC):
**B60K 7/0007;** B60Y 2200/62; B60Y 2304/072; B60Y 2304/076; B60Y 2400/305

(54) **MODULE DE MOTORISATION AUTONOME POUR UN CHARIOT DE DÉPLACEMENT D'UNE CHARGE AU SOL, ENSEMBLE D'UN CHARIOT ET D'UN MODULE DE MOTORISATION**

AUTONOMES MOTORISIERUNGSMODUL FÜR EINEN WAGEN ZUM BEWEGEN EINER BODENLAST, SATZ EINES WAGENS UND EINES MOTORISIERUNGSMODULS

AUTONOMOUS DRIVE MODULE FOR A CARRIAGE FOR MOVING A LOAD ON THE GROUND, ASSEMBLY OF A CARRIAGE AND A DRIVE MODULE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.04.2022 FR 2203207**

(43) Date de publication de la demande:
**11.10.2023 Bulletin 2023/41**

(73) Titulaire: **BM Manutention**
**32600 L'Isle Jourdain (FR)**

(72) Inventeurs:
• **BASSO, Monique**
**32600 L'ISLE JOURDAIN (FR)**
• **PEYRUSE, Thomas**
**31530 SAINTE LIVRADE (FR)**
• **ZWOLINSKI, Sylvain**
**31530 SAINTE LIVRADE (FR)**

(74) Mandataire: **Argyma**
**14 Boulevard de Strasbourg**
**31000 Toulouse (FR)**

(56) Documents cités:
**EP-A1- 1 927 525** WO-A1-2018/115084
**DE-A1- 19 614 411**

**Description**

**DOMAINE TECHNIQUE**

La présente invention concerne le domaine des chariots configurés pour déplacer une charge au sol, en particulier, pour le domaine hospitalier afin de transporter des biens, des équipements, des repas, des médicaments ou même des patients.

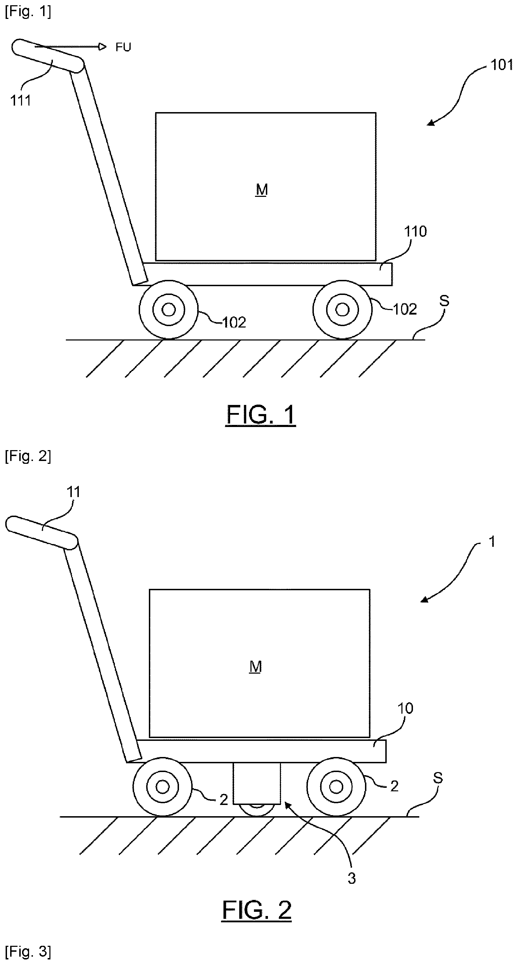

En référence à la figure 1, il est représenté un chariot 100 de déplacement d'une charge M au sol S selon l'art antérieur. De manière connue, le chariot 100 comporte un châssis 110 sur lequel sont montés plusieurs roues de roulement 102 configurées pour entrer en contact avec le sol S, par exemple, au nombre de quatre. Le chariot 100 comporte généralement une barre de préhension 111 pour permettre à un opérateur de tirer et/ou de pousser le chariot 100 afin de le déplacer.

De manière classique, pour déplacer le chariot 100, l'opérateur applique un effort physique FU qui est fonction de la charge M à déplacer. En particulier, pour mettre en mouvement le chariot lorsqu'il est immobile, il est nécessaire d'appliquer un « coup de bélier », c'est-à-dire, un effort physique croissant de valeur importante qui est ensuite diminué pour bénéficier de l'inertie du chariot 100. Le déplacement répété d'un chariot 100 induit une pénibilité pour les opérateurs, ce qui présente un inconvénient. De tels inconvénients sont encore plus prononcés dans le domaine hospitalier du fait de la fréquence des déplacements.

De manière connue, l'effort physique FU dépend de la résistance au roulement qui est de l'ordre de 3% pour des roues de roulement 2 sur un sol S qui est dur. Ainsi, pour un chariot 1 d'une masse de 300kg, l'opérateur aura à pousser 9kg avant de démarrer. A titre indicatif, cette force peut être plus importante pour un démarrage si le chariot 1 est immobile depuis longtemps (cela dépend de la qualité de la bande de roulement)

Une solution immédiate pour éliminer cet inconvénient serait de motoriser un chariot en prévoyant une ou plusieurs roues motorisées reliées à une manette de commande. Cela permet de commander de manière pratique et sans effort la vitesse du chariot.

En pratique, l'utilisation d'une manette de commande est peu pratique étant donné qu'elle peut entraîner des à-coups lors du déplacement du chariot. En outre, elle présente l'inconvénient de monopoliser une main de l'opérateur qui ne peut pas réaliser d'autres actions. En outre, la manette de commande est positionnée en un point du chariot, ce qui est contraignant pour des opérateurs qui ont l'habitude de pousser/tirer le chariot à diverses positions du chariot.

Du fait de ces contraintes, l'usage d'une manette de commande est peu pratique et rend complexe l'adoption des systèmes de motorisation par des opérateurs. En outre, l'installation d'un système de motorisation est complexe et nécessite de faire appel à des techniciens spécialisés pour installer, d'une part, la ou les roues motorisées et, d'autre part, la manette de commande. Une telle installation est ainsi onéreuse.

L'invention vise à proposer un module de motorisation autonome qui puisse être monté de manière rapportée et pratique à un chariot existant ne disposant pas de motorisation et qui soit simple d'utilisation.

On connaît par DE102020111434A1 un module de motorisation permettant de régler la force d'appui en fonction du sens de déplacement. Un module de motorisation autonome pour un chariot de déplacement d'une charge au sol est aussi connu du document WO 2018/115084 A1.

**PRESENTATION DE L'INVENTION**

L'invention concerne un module de motorisation autonome pour un chariot de déplacement d'une charge au sol, le chariot comportant un châssis sur lequel sont montés plusieurs roues de roulement configurées pour entrer en contact avec le sol, le module de motorisation comprenant :

- Un corps principal configuré pour être fixé solidairement au châssis du chariot,
- au moins une roue motrice, montée mobile en rotation dans le corps principal autour d'un arbre solidaire du corps principal, configurée pour entrer en contact avec le sol,
- au moins un moteur électrique configuré pour entraîner en rotation la roue motrice à une vitesse d'entrainement,
- au moins une batterie électrique configurée pour alimenter le moteur électrique,
- au moins un système de mesure ledit module de motorisation autonome étant caractérisé en ce que ledit au moins un système de mesure est configuré pour mesurer l'effort appliqué par la roue motrice à l'arbre, et en ce qu'il comprend
- au moins un calculateur configuré pour déterminer automatiquement la vitesse d'entrainement en fonction de l'effort mesuré et

Grâce à l'invention, le module de motorisation est dépourvu de manette de commande et peut être commandé de manière autonome. Ainsi, un opérateur a ses deux mains de libres et n'est pas contraint à manipuler une manette. En outre, comme la vitesse d'entrainement est fonction de l'effort appliqué par la roue, on peut déterminer les frottements et les compenser de manière pratique et automatique. L'opérateur dispose d'une assistance adaptative sans recourir à une manette de commande. Cela permet de faciliter l'adoption par les opérateurs. En outre, un tel module de motorisation peut être monté de manière pratique et rapide sur un chariot existant, ce qui est avantageux.

De manière préférée, le système de mesure comporte deux organes de mesure reliant l'arbre au corps principal de manière à former un triangle, de préférence, isocèle. Un tel triangle permet de mesurer de manière pratique les composantes verticales par déformation du triangle suite à un effort. La sensibilité de la mesure est élevée. Un triangle isocèle permet de réaliser une mesure pertinente lors d'une poussée ou lors d'une traction.

De préférence, chaque organe de mesure est configuré pour mesurer un effort vertical, de préférence, uniquement un effort vertical. Un tel organe de mesure, en particulier une cellule de mesure d'effort à jauges de contrainte, est fiable et peu onéreux.

De manière préférée, la vitesse d'entrainement est configurée pour compenser une partie de la composante horizontale de l'effort mesuré. De préférence, la vitesse d'entrainement est configurée pour compenser la composante horizontale de l'effort mesuré selon un taux de compensation compris entre 30% et 70%. Ainsi, l'opérateur conserve encore un effort résistif lors de la manipulation du chariot qui lui permet d'appréhender de manière pratique un déplacement. La pénibilité est réduite.

De préférence, le calculateur comprend une base de données, en particulier une table, dans laquelle chaque composante horizontale de l'effort mesuré est associée à une vitesse d'entrainement.

De manière préférée, le module de motorisation comporte au moins un système de mesure configuré pour mesurer la vitesse de rotation courante de la roue motrice. Le calculateur est configuré pour déterminer automatiquement la vitesse d'entrainement en fonction de l'effort mesuré et de la vitesse de rotation courante. Cela permet de régler l'énergie à fournir à la roue motrice en tenant compte de sa vitesse courante.

Dans ce cas, le calculateur comprend une base de données, en particulier une table, dans laquelle chaque composante horizontale de l'effort mesuré et chaque vitesse courante de la roue motrice est associée à une vitesse d'entrainement.

L'invention concerne également un ensemble d'un chariot de déplacement d'une charge au sol, le chariot comportant un châssis sur lequel sont montés plusieurs roues de roulement configurées pour entrer en contact avec le sol, et d'un module de motorisation, tel que présenté précédemment, fixé solidairement au châssis du chariot.

L'invention concerne aussi un procédé de déplacement d'un chariot équipé d'un module de motorisation tel que présenté précédemment, le procédé comprenant des étapes consistant à :

- Appliquer un effort physique au chariot par un opérateur,

- Mesurer l'effort appliqué par la roue motrice à l'arbre,

- Déterminer automatiquement une vitesse d'entrainement en fonction de l'effort mesuré,

- Activer le moteur électrique pour entrainer en rotation la roue motrice à la vitesse d'entrainement de manière à fournir un effort propulsif qui vient suppléer l'effort physique de l'opérateur.

De manière préférée, le procédé comprend des étapes consistant à :

- Mesurer la vitesse de rotation courante de la roue motrice,

- Déterminer automatiquement une vitesse d'entrainement en fonction de l'effort et de la vitesse de rotation courante.

## PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.

La figure 1 est une représentation schématique d'un chariot de déplacement selon l'art antérieur.

La figure 2 est une représentation schématique vue de côté d'un chariot de déplacement avec un module de motorisation selon une forme de réalisation de l'invention.

La figure 3 est une représentation schématique vue de dessous d'un chariot de déplacement avec un module de motorisation selon une autre forme de réalisation de l'invention.

La figure 4 est une représentation schématique d'un module de motorisation selon l'invention.

La figure 5 est une autre représentation schématique d'un module de motorisation selon l'invention.

La figure 6 est une représentation schématique du chariot de déplacement de la figure 3 lors de l'utilisation du module de motorisation.

Il faut noter que les figures exposent l'invention de manière détaillée pour mettre en oeuvre l'invention, lesdites figures pouvant bien entendu servir à mieux définir l'invention le cas échéant.

## DESCRIPTION DETAILLEE DE L'INVENTION

L'invention concerne un module de motorisation 3 pour un chariot 1 de déplacement d'une charge M au sol S. Comme cela sera présenté par la suite, le module de motorisation 3 est autonome et peut être monté de manière indépendante sur un chariot 1 sans expertise particulière. De plus, il est commandé de manière automatique, c'est-à-dire, sans recevoir de commande manuelle. Un tel module de motorisation 3 est plus susceptible d'être favorablement adopté par des opérateurs.

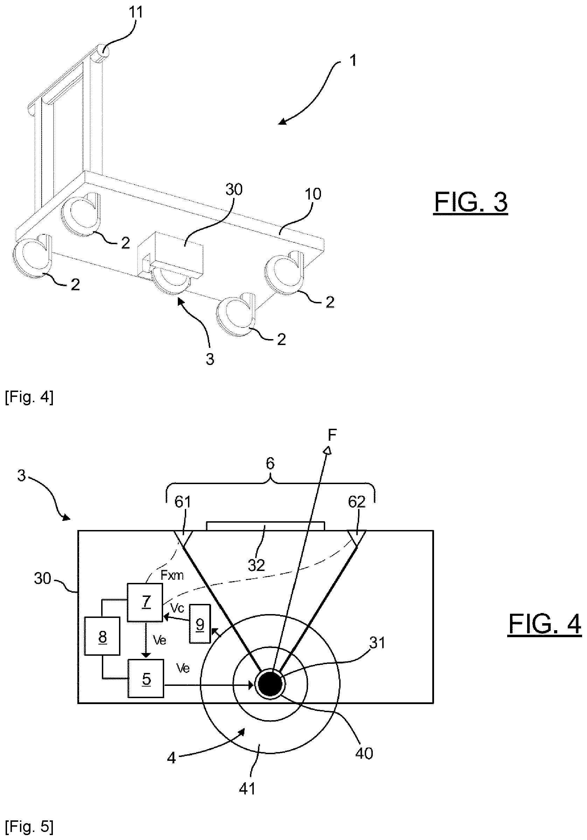

Dans cet exemple, en référence à aux figures 2 et 3, le chariot 1 comporte un châssis 10 sur lequel sont montés plusieurs roues de roulement 2 configurées pour entrer en contact avec le sol S. Le chariot 1 permet de transporter tout type de charge. Il est particulièrement adapté pour le domaine hospitalier afin de transporter des biens, des équipements, des repas, des médicaments ou même des patients (brancards). Le chariot 1 comprend de préférence au moins trois roues de roulement 2, de préférence, quatre ou cinq. Dans cet exemple, le châssis 10 possède une forme rectangulaire. Le chariot 1 comporte quatre roues de roulement 2 montées aux coins du châssis 10. Les roues de roulement 2 peuvent être à axe fixe ou à axe mobile (roue folle).

Comme illustré aux figures 2 et 3, le module de motorisation 3 est monté sous le châssis 10 du chariot 1, en particulier, au centre dudit châssis 10. Dans cet exemple, le module de motorisation autonome 3 est monté entre les quatre roues de roulement 2.

Le module de motorisation 3 selon l'invention va être dorénavant présenté en référence à la figure 4.

En référence à la figure 4, le module de motorisation 3 comporte un corps principal 30 configuré pour être fixé solidairement au châssis 10 du chariot 1. Le module de motorisation 3 comporte également une roue motrice 4, montée mobile en rotation dans le corps principal 30, configurée pour entrer en contact avec le sol S.

La roue motrice 4 comporte un moyeu 40 dans lequel est monté un arbre 31 solidaire du corps principal 30 afin de permettre un mouvement relatif entre la roue motrice 4 et le corps principal 30. L'arbre 31 permet de guider le moyeu 40 lors de sa rotation et de transférer des efforts du corps principal 30 à la roue 4.

Comme représenté de manière schématique à la figure 4, le module de motorisation 3 comporte un moteur électrique 5 configuré pour entrainer en rotation la roue motrice 4 à une vitesse d'entrainement Ve. Dans cet exemple, le moyeu 40 est relié au moteur électrique 5. De manière préférée, afin de réduire l'encombrement, le moteur électrique 5 est intégré dans le moyeu 40 de la roue 4. Le moteur électrique 5 est de préférence du type « brushless » (sans balais) mais il va de soi que d'autres types de moteur électrique 5 pourraient convenir.

Selon l'invention, le module de motorisation 3 comporte également un système de mesure 6 de l'effort appliqué par la roue motrice 4 au corps principal 3. Comme illustré à la figure 4, le système de mesure 6 comporte deux organes de mesure 61, 62 reliant l'arbre 31 au corps principal 30. Ainsi, le poids du chariot 1 est transmis aux roues de roulement 2 mais également à la roue motrice 4 via l'arbre 31. Comme cela sera présenté par la suite, lors d'un déplacement du chariot 1, un effort réciproque est appliqué par la roue motrice 4 à l'arbre 31 qui le transmet au corps principal 30 via les organes de mesure 61, 62.

En référence à la figure 4, les organes de mesure 61, 62 et l'arbre 31 définissent ensemble un triangle, de préférence isocèle, pour mesurer l'effort F appliqué à l'arbre 31, c'est-à-dire, à la roue 4. Une telle configuration permet d'optimiser la détection des efforts dans chaque direction de déplacement de la roue motrice 4.

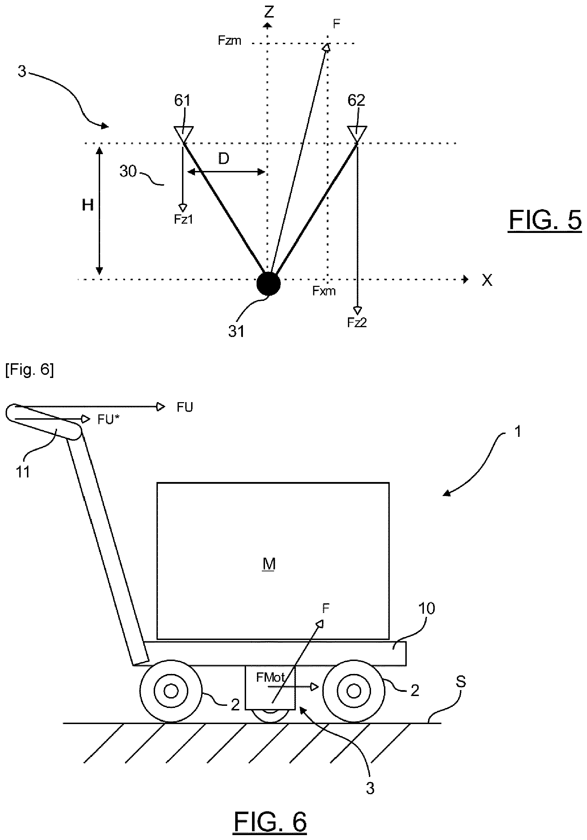

Comme illustré à la figure 5, chaque organe de mesure 61, 62 est configuré pour mesurer un effort vertical Fz1, Fz2, de préférence, uniquement un effort vertical Fz1, Fz2. Un tel organe de mesure 61, 62 possède une structure robuste et bon marché. De manière préférée, les organes de mesure 61, 62 se présentent sous la forme de cellules de mesure d'effort à jauges de contrainte mais il va de soi que tout capteur d'effort réactif optique, capacitif, résistif ou piézo-électrique, pourrait également convenir. De préférence, chaque cellule de mesure d'effort à jauges de contrainte comporte quatre jauges de contrainte.

En référence à la figure 5, il est représenté un effort F appliqué par la roue 4 à l'arbre 31 du corps principal 30. Cet effort F résulte d'une part de l'effort appliqué par l'opérateur au chariot F pour son déplacement et, d'autre part, des frottements de la roue motrice 4 par rapport au sol S.

Dans cet exemple, l'effort F comprend une composante horizontale Fxm selon l'axe horizontal X et une composante verticale Fzm selon l'axe vertical Z. La composante horizontale Fxm, liée principalement aux frottements, est mesurée par les organes de mesure 61, 62. La composante horizontale Fxm s'oppose à l'effort F appliqué par l'opérateur et doit être compensée comme cela sera présenté par la suite.

Toujours en référence à la figure 5, la composante horizontale Fxm entraine une déformation du triangle formé par l'ensemble des organes de mesure 61, 62 et de l'arbre 31, ce qui induit des efforts verticaux Fz1, Fz2 au niveau des organes de mesure 61, 62 qui sont mesurables par les organes de mesure 61, 62.

En pratique, on obtient les relations suivantes :

$$[\text{Math. 1}] \quad Fzm = Fz1 + Fz2$$

$$[\text{Math. 2}] \quad Fxm = \frac{D}{H}(Fz2 - Fz1)$$

Dans lesquelles :

- D correspond à la distance horizontale entre un organe de mesure 61, 62 et l'arbre 31

- H correspond à la distance verticale entre un organe de mesure 61, 62 et l'arbre 31.

Ainsi, grâce au système de mesure 6, on détermine la composante horizontale Fxm qui doit être compensée mais également la composante verticale Fzm.

Selon l'invention, en référence à la figure 4, le module de motorisation 3 comprend également un calculateur 7 configuré pour déterminer la vitesse d'entrainement Ve en fonction de l'effort mesuré F, en particulier, en fonction de la composante horizontale Fxm dudit effort F.

Dans cet exemple, la vitesse d'entrainement Ve est configurée pour compenser tout ou partie de la composante horizontale Fxm. De préférence, la vitesse d'entrainement Ve est choisie pour compenser une partie de la composante horizontale Fxm. Par la suite, on définit un taux de compensation $\alpha$, qui correspond au taux de réduction de la composante horizontale Fxm sans et avec motorisation. De préférence, le taux de compensation $\alpha$ est comprise entre 30% et 70%, de préférence, de l'ordre de 50%. De manière avantageuse, la compensation est dynamique et permet ainsi de s'adapter à l'effort appliqué F. Plus l'effort F est important et plus la compensation est importante. Cela permet à l'opérateur de manipuler le chariot 1 de manière manuelle sans se soucier de la compensation à appliquer, celle-ci étant déterminée de manière automatique.

Dans cet exemple, le calculateur 7 comprend une base de données, en particulier une table, dans laquelle chaque composante horizontale Fxm est associée à une vitesse d'entrainement Ve adaptée au taux de compensation $\alpha$. Il va de soi que le taux de compensation $\alpha$ pourrait être paramétrable. Dans ce cas, chaque composante horizontale Fxm serait associée à une vitesse d'entrainement Ve adaptée à chaque taux de compensation $\alpha$.

Selon un aspect préféré de l'invention, en référence à la figure 5, le module de motorisation 3 comporte un système de mesure 9 configuré pour mesurer la vitesse de rotation courante Vc de la roue motrice 4, par exemple, un capteur de vitesse ou un capteur angulaire.

Le calculateur 7 est alors configuré pour déterminer automatiquement la vitesse d'entrainement Ve en fonction de l'effort mesuré F et de la vitesse de rotation courante Vc. Dans ce cas, le calculateur 7 comprend une base de données, en particulier une table, dans laquelle chaque composante horizontale de l'effort mesuré Fxm et chaque vitesse courante Vc de la roue motrice 4 est associée à une vitesse d'entrainement Ve. Cela permet avantageusement de tenir compte de la vitesse courante Vc de la roue motrice pour atteindre la vitesse d'avancement désirée pour le chariot 1.

Le module de motorisation 3 comprend en outre une batterie électrique 8 configurée pour alimenter le moteur électrique 5, le système de mesure 6 d'effort F, le calculateur 7 et le système de mesure 9 de la vitesse de rotation courante Vc. Ainsi, le module de motorisation 3 est autonome en énergie, ce qui facilite son installation et son utilisation. De manière préférée, la batterie électrique 8 est rechargeable. Il va de soi que plusieurs technologies de batterie électrique 8 pourraient convenir, par exemple, Lithium.

Le corps principal 30 possède une fonction de boitier pour le logement des différents éléments du module de motorisation 3. Dans cet exemple, en référence à la figure 3, le corps principal 30 comporte une rainure dans laquelle est montée en saillie la roue motrice 4. Le corps principal 30 peut ainsi protéger le moteur électrique 5, le système de mesure 6, le calculateur 7 et la batterie électrique 8.

Dans cet exemple, le corps principal 30 comporte en outre un ou plusieurs organes de fixation 32, par exemple une platine, pour fixer le corps principal 30 sous le châssis 10 de manière pratique.

En référence à la figure 6, il est représenté un chariot 1 équipé d'un module de motorisation 3 selon une forme de réalisation. Le module de motorisation 3 est simple à installer étant donné qu'il suffit à l'opérateur de monter le corps principal 30 sur le châssis 10 du chariot 1, en particulier, grâce aux organes de fixation 32. La roue motrice 4 est en contact avec le sol S.

Le module de motorisation 3 est monté de manière autonome sans impact sur l'organe de préhension 11. Il n'est en particulier prévu aucune manette. De manière préférée, après installation, il est mis en oeuvre une étape de calibration du système de mesure 6 sans sollicitation. Cette étape de calibration est mise en oeuvre de manière automatique.

Un exemple de mise en oeuvre est présenté à la figure 6. Dans cet exemple, un opérateur exerce un effort physique FU sur le chariot 1 qui est immobile. Cela se traduit en un effort F qui est mesuré par le système de mesure 6 du module de motorisation 3, en particulier, par les deux organes de mesure 61, 62. Le calculateur 7 détermine, pour un taux de compensation $\alpha$ prédéterminé (par exemple 50%), la vitesse d'entrainement Ve en fonction de l'effort F et de la vitesse de rotation courante Vc. Le moteur électrique 5 commande la rotation de la roue motrice 4 à la vitesse d'entrainement Ve déterminée par le calculateur 7. La roue motrice 4 engendre un effort propulsif FMot qui vient compenser l'effort FU de l'utilisateur, dans cet exemple de 50%. L'opérateur peut ainsi réduire son effort FU à une valeur inférieure FU*, ce qui réduit sa pénibilité.

Un tel module de motorisation 3 est pertinent pour gérer les coups de bélier réalisés par les opérateurs pour déplacer un chariot immobile 1. Au lieu de fournir un effort physique croissant sur le chariot 1 (ce qui est source de pénibilité), l'opérateur peut avantageusement fournir un effort constant qui est augmenté au bout d'un certain temps par le moteur électrique 5. Ainsi, l'opérateur bénéficie d'une accélération naturelle et contrôlée.

## Revendications

1. Module de motorisation (3) autonome pour un chariot (1) de déplacement d'une charge (M) au sol (S), le chariot (1) comportant un châssis (10) sur lequel sont montés plusieurs roues de roulement (2) configurées pour entrer en contact avec le sol (S), le module de motorisation (3) comprenant :

- Un corps principal (30) configuré pour être fixé solidairement au châssis (10) du chariot (1),
- au moins une roue motrice (4), montée mobile en rotation dans le corps principal (30) autour d'un arbre (31) solidaire du corps principal (30), configurée pour entrer en contact avec le sol (S),
- au moins un moteur électrique (5) configuré pour entrainer en rotation la roue motrice (4) à une vitesse d'entrainement (Ve),
- au moins une batterie électrique (8) configurée pour alimenter le moteur électrique (5),
- au moins un système de mesure (6), ledit module de motorisation autonome étant **caractérisé en ce que** ledit au moins un système de mesure (6) est configuré pour mesurer l'effort (F) appliqué par la roue motrice (4) à l'arbre (31), et **en ce qu**'il comprend
- au moins un calculateur (7) configuré pour déterminer automatiquement la vitesse d'entrainement (Ve) en fonction de l'effort mesuré (F) et

2.  Module de motorisation (3) selon la revendication 1, dans lequel le système de mesure (6) comporte deux organes de mesure (61, 62) reliant l'arbre (31) au corps principal (30) de manière à former un triangle, de préférence, isocèle.

3.  Module de motorisation (3) selon la revendication 2, dans lequel chaque organe de mesure (61, 62) est configuré pour mesurer un effort vertical (Fz1, Fz2), de préférence, uniquement un effort vertical (Fz1, Fz2).

4.  Module de motorisation (3) selon l'une des revendications 1 à 3, dans lequel la vitesse d'entrainement (Ve) est configurée pour compenser une partie de la composante horizontale (Fxm) de l'effort mesuré (F).

5.  Module de motorisation (3) selon l'une des revendications 1 à 3, dans lequel la vitesse d'entrainement (Ve) est configurée pour compenser la composante horizontale (Fxm) de l'effort mesuré (F) selon un taux de compensation ($\alpha$) compris entre 30% et 70%.

6.  Module de motorisation (3) selon l'une des revendications 1 à 5, dans lequel le calculateur (7) comprend une base de données, en particulier une table, dans laquelle chaque composante horizontale (Fxm) de l'effort mesuré (F) est associée à une vitesse d'entrainement (Ve).

7.  Module de motorisation (3) selon l'une des revendications 1 à 6, comprenant au moins un système de mesure (9) configuré pour mesurer la vitesse de rotation courante (Vc) de la roue motrice (4), le calculateur (7) était configuré pour déterminer automatiquement la vitesse d'entrainement (Ve) en fonction de l'effort mesuré (F) et de la vitesse de rotation courante (Vc).

8.  Ensemble d'un chariot (1) de déplacement d'une charge (M) au sol (S), le chariot (1) comportant un châssis (10) sur lequel sont montés plusieurs roues de roulement (2) configurées pour entrer en contact avec le sol (S), et d'un module de motorisation (3), selon l'une des revendications 1 à 7, fixé solidairement au châssis (10) du chariot (1).

9.  Procédé de déplacement d'un chariot (1) équipé d'un module de motorisation (3) selon l'une des revendications 1 à 7, le procédé comprenant des étapes consistant à :

    - Appliquer un effort physique (FU) au chariot (1) par un opérateur,
    - Mesurer l'effort (F) appliqué par la roue motrice (4) à l'arbre (31),
    - Déterminer automatiquement une vitesse d'entrainement (Ve) en fonction de l'effort mesuré (F),
    - Activer le moteur électrique (5) pour entrainer en rotation la roue motrice (4) à la vitesse d'entrainement (Ve) de manière à fournir un effort propulsif (FMot) qui vient suppléer l'effort physique (FU) de l'opérateur.

**Patentansprüche**

1.  Autonomes Motorisierungsmodul (3) für einen Wagen (1) zum Bewegen einer Last (M) am Boden (S), wobei der Wagen (1) ein Fahrgestell (10) aufweist, an dem mehrere Rollräder (2) angebracht sind, die ausgelegt sind, um mit dem Boden (S) in Kontakt zu treten, wobei das Motorisierungsmodul (3) umfasst:

    - einen Hauptkörper (30), der zur festen Befestigung am Fahrgestell (10) des Wagens (1) ausgelegt ist,
    - mindestens ein Antriebsrad (4), das rotationsbeweglich im Hauptkörper (30) um eine Welle (31) angebracht ist, die mit dem Hauptkörper (30) fest verbunden ist, das ausgelegt ist, um mit dem Boden (S) in Kontakt zu treten,
    - mindestens einen Elektromotor (5), der ausgelegt ist, um das Antriebsrad (4) in einer Antriebsgeschwindigkeit (Ve) rotatorisch anzutreiben,
    - mindestens eine elektrische Batterie (8), die ausgelegt ist, um den Elektromotor (5) zu versorgen,
    - mindestens ein Messsystem (6), wobei das autonome Motorisierungsmodul **dadurch gekennzeichnet ist, dass** das mindestens eine Messsystem (6) ausgelegt ist, um die von dem Antriebsrad (4) auf die Welle (31) ausgeübte Kraft (F) zu messen, und dass es umfasst
- mindestens einen Rechner (7), der ausgelegt ist, um die Antriebsgeschwindigkeit (Ve) in Abhängigkeit von der gemessenen Kraft (F) automatisch zu bestimmen.

**2.** Motorisierungsmodul (3) nach Anspruch 1, wobei das Messsystem (6) zwei Messeinrichtungen (61, 62) aufweist, die die Welle (31) mit dem Hauptkörper (30) derart verbinden, dass ein Dreieck gebildet wird, vorzugsweise ein gleichschenkliges Dreieck.

**3.** Motorisierungsmodul (3) nach Anspruch 2, wobei jede Messeinrichtung (61, 62) ausgelegt ist, um eine vertikale Kraft (Fz1, Fz2), zu messen, vorzugsweise nur eine vertikale Kraft (Fz1, Fz2).

**4.** Motorisierungsmodul (3) nach einem der Ansprüche 1 bis 3, wobei die Antriebsgeschwindigkeit (Ve) ausgelegt ist, um einen Teil der horizontalen Komponente (Fxm) der gemessenen Kraft (F) zu kompensieren.

**5.** Motorisierungsmodul (3) nach einem der Ansprüche 1 bis 3, wobei die Antriebsgeschwindigkeit (Ve) ausgelegt ist, um die horizontale Komponente (Fxm) der gemessenen Kraft (F) gemäß einer Kompensationsrate ($\alpha$) zwischen 30 % und 70 % zu kompensieren.

**6.** Motorisierungsmodul (3) nach einem der Ansprüche 1 bis 5, wobei der Rechner (7) eine Datenbank, insbesondere eine Tabelle, umfasst, in der jede horizontale Komponente (Fxm) der gemessenen Kraft (F) einer Antriebsgeschwindigkeit (Ve) zugeordnet ist.

**7.** Motorisierungsmodul (3) nach einem der Ansprüche 1 bis 6, umfassend mindestens ein Messsystem (9), das ausgelegt ist, um die aktuelle Rotationsgeschwindigkeit (Vc) des Antriebsrads (4) zu messen, wobei der Rechner (7) ausgelegt ist, um die Antriebsgeschwindigkeit (Ve) in Abhängigkeit von der gemessenen Kraft (F) und von der aktuellen Rotationsgeschwindigkeit (Vc) automatisch zu bestimmen.

**8.** Anordnung aus einem Wagen (1) zum Bewegen einer Last (M) am Boden (S), wobei der Wagen (1) ein Fahrgestell (10) aufweist, an dem mehrere Rollräder (2) angebracht sind, die ausgelegt sind, um mit dem Boden (S) in Kontakt zu treten, und einem Motorisierungsmodul (3) nach einem der Ansprüche 1 bis 7, das am Fahrgestell (10) des Wagens (1) fest befestigt ist.

**9.** Verfahren zum Bewegen eines Wagens (1), der mit einem Motorisierungsmodul (3) nach einem der Ansprüche 1 bis 7 ausgestattet ist, wobei das Verfahren die folgenden Schritte umfasst:

- Anwenden einer physischen Kraft (FU) auf den Wagen (1) durch einen Bediener,
- Messen der von dem Antriebsrad (4) auf die Welle (31) ausgeübten Kraft (F),
- automatisches Bestimmen einer Antriebsgeschwindigkeit (Ve) in Abhängigkeit von der gemessenen Kraft (F),
- Aktivieren des Elektromotors (5), um das Antriebsrad (4) in Antriebsgeschwindigkeit (Ve) derart rotatorisch anzutreiben, dass eine Vortriebskraft (FMot) bereitgestellt wird, die die physische Kraft (FU) des Bedieners ersetzt.

**Claims**

**1.** An autonomous motor drive module (3) for a trolley (1) for moving a load (M) on the ground (S), the trolley (1) comprising a chassis (10) to which a plurality of rolling wheels (2) are mounted configured to contact the ground (S), the motor drive module (3) comprising:

- A main body (30) configured to be integrally attached to the chassis (10) of the trolley (1),
- at least one drive wheel (4), rotatably mounted in the main body (30) about a shaft (31) integral with the main body (30), configured to contact the ground (S),
- at least one electric motor (5) configured to rotatably drive the drive wheel (4) at a drive speed (Ve),
- at least one electric battery (8) configured to supply the electric motor (5),
- at least one measurement system (6), said autonomous motor drive module being **characterised in that** said at least one measurement system (6) is configured to measure the force (F) applied by the drive wheel (4) to the shaft (31), and **in that** it comprises
- at least one calculator (7) configured to automatically determine the drive speed (Ve) as a function of the force (F) measured.

**2.** The motor drive module (3) according to claim 1, wherein the measurement system (6) comprises two measurement members (61, 62) connecting the shaft (31) to the main body (30) so as to form a triangle, preferably isosceles triangle.

**3.** The motor drive module (3) according to claim 2, wherein each measurement member (61, 62) is configured to measure a vertical force (Fz1, Fz2), preferably only a vertical force (Fz1, Fz2)

**4.** The motor drive module (3) according to one of claims 1 to 3, wherein the drive speed (Ve) is configured to compensate for part of the horizontal component (Fxm) of the force (F) measured.

5. The motor drive module (3) according to one of claims 1 to 3, wherein the drive speed (Ve) is configured to compensate for the horizontal component (Fxm) of the force (F) measured according to a compensation rate (a) between 30% and 70%.

6. The motor drive module (3) according to any one of claims 1 to 5, wherein the calculator (7) comprises a database, in particular a table, in which each horizontal component (Fxm) of the force (F) measured is associated with a drive speed (Ve).

7. The motor drive module (3) according to one of claims 1 to 6, comprising at least one measurement system (9) configured to measure the current rotational speed (Vc) of the drive wheel (4), the calculator (7) being configured to automatically determine the drive speed (Ve) as a function of the force (F) measured and the current rotational speed (Vc).

8. An assembly of a trolley (1) for moving a load (M) on the ground (S), the trolley (1) comprising a chassis (10) to which a plurality of rolling wheels (2) configured to contact the ground (S) are mounted, and a motor drive module (3), according to one of claims 1 to 7, integrally attached to the chassis (10) of the trolley (1).

9. A method for moving a trolley (1) equipped with a motor drive module (3) according to one of claims 1 to 7, the method comprising the steps of:

 - Applying a physical force (FU) to the trolley (1) by an operator,
 - Measuring the force (F) applied by the drive wheel (4) to the shaft (31),
 - Automatically determining a drive speed (Ve) as a function of the force (F) measured,
 - Activating the electric motor (5) to rotate the drive wheel (4) at the drive speed (Ve) in order to provide a propulsion force (FMot) that supplements the physical force (FU) of the operator.

[Fig. 1]

FIG. 1

[Fig. 2]

FIG. 2

[Fig. 3]

FIG. 3

[Fig. 4]

FIG. 4

[Fig. 5]

FIG. 5

[Fig. 6]

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102020111434 A1

- WO 2018115084 A1